# EUROPÄISCHE PATENTSCHRIFT

(11) **EP 3 611 912 B1**
(45) Veröffentlichungstag und Bekanntmachung des Hinweises auf die Patenterteilung: **23.11.2022**
(21) Anmeldenummer: 18189145.8
(22) Anmeldetag: 15.08.2018
(51) Int. Cl.: H04N 1/195

(54) **DIASCANNER**
SLIDE SCANNER
BALAYEUR POUR DIAPOSITIVES

(43) Veröffentlichungstag der Anmeldung: 19.02.2020
(73) Patentinhaber: reflecta GmbH, 72184 Eutingen (DE)
(72) Erfinder: Schock, Hans-Dieter, 72202 Nagold (DE)
(74) Vertreter: Witte, Weller & Partner Patentanwälte mbB

(56) Entgegenhaltungen:
- EP-A1- 2 129 098
- DE-A1- 10 159 598
- DE-A1- 19 621 714
- GB-A- 2 150 782
- US-A1- 2009 167 854
- Unknown: "Bedienungsanleitung reflecta DigitDia 6000 CyberView X5", , 11. April 2018 (2018-04-11), XP055547764, Gefunden im Internet: URL:https://reflecta.de/uploads/files/2018 0411095322_Bedienungsanleitung-DD-6000-deu tsch.pdf [gefunden am 2019-01-25]

## Beschreibung

Die Erfindung betrifft einen Diascanner mit den Merkmalen des Oberbegriffs des Anspruchs 1. Ein Diascanner dient zum Umwandeln von Dias, also von transparenten, fotografischen, gerahmten Bildern, in digitale Bilddateien, in denen Bildinhalte der Dias digital gespeichert sind. Das Umwandeln von Dias in digitale Bilddateien wird auch als Digitalisieren von Dias bezeichnet.

Bekannt ist ein Diascanner DigitDia 6000 der Firma reflecta GmbH, der Dias aus Diamagazinen digitalisiert. Dieser Diascanner muss zu seinem Betrieb zwingend an einen Computer angeschlossen werden.

Das Patent US 2009/0 167 854 A1 offenbart einen Einzelbild-Diascanner, bei dem Dias einzeln von Hand zugeführt werden müssen. Ein Anschluss an einen Computer ist nicht vorgesehen.

Aufgabe der Erfindung ist einen Diascanner zu einem automatischen Scannen von Dias aus einem Diamagazin vorzuschlagen. Diamagazin meint hier insbesondere solche, wie sie zum Projizieren von Dias mit üblichen Diaprojektoren verwendet werden.

Gelöst wird diese Aufgabe durch die Merkmale des Anspruchs 1. Der erfindungsgemäße Diascanner weist eine Magazinführung zu einem verschieblichen Führen des Diamagazins vorzugsweise in seiner Längsrichtung und einen Magazinvorschub zu einem vorzugsweise schrittweisen Vorschub des Diamagazins in der Magazinführung um einen Abstand der Dias in dem Diamagazin voneinander in der Längsrichtung bzw. der Vorschubrichtung.

Des Weiteren weist der erfindungsgemäße Diascanner eine Scaneinrichtung zum Scannen eines Dias und eine Zuführeinrichtung zum Zuführen eines Dias aus dem Diamagazin in der Magazinführung in die Scaneinrichtung und nach dem Scannen des Dias zurück in das Diamagazin auf. Möglich ist auch den Diascanner mit zwei Magazinführungen für zwei Diamagazine auszubilden und ein Dia aus einem der beiden Diamagazine mit der Zuführeinrichtung zu entnehmen, der Scaneinrichtung zuzuführen und nach dem Scannen in das andere Diamagazin zu verbringen. Die Scaneinrichtung durchleuchtet normalerweise ein Dia und projiziert es auf einen Bildsensor, das heißt auf eine lichtempfindliche Fläche eines integrierten Schaltkreises.

Der erfindungsgemäße Diascanner ist als sogenanntes Stand-Alone Gerät ausgebildet, das ohne weitere Geräte funktionsfähig ist. Der erfindungsgemäße Diascanner muss deswegen zum Digitalisieren nicht an einen Computer oder dergleichen angeschlossen werden. Dazu weist der erfindungsgemäße Diascanner einen digitalen Datenspeicher zum Speichern der digitalen Bilddateien und einen Prozessor zur Steuerung der Komponenten des Diascanners und zur digitalen Verarbeitung von Daten der Scaneinrichtung auf. Die Komponenten des Diascanners sind insbesondere die Magazinführung und der Magazinvorschub, die Scaneinrichtung und die Zuführeinrichtung. Außerdem errechnet der Prozessor die digitalen Bilddaten aus analogen Signalen und/oder digitalen Werten der Scaneinrichtung, so weit das nicht bereits die Scaneinrichtung erledigt. Der Prozessor kann Teil der Scaneinrichtung sein, beispielsweise kann der Bildsensor zugleich auch den Prozessor oder Teile des Prozessors aufweisen.

In bevorzugter Ausgestaltung der Erfindung sind die Magazinführung und der Magazinvorschub für verschiedene Diamagazintypen ausgebildet, das heißt es können beispielsweise sogenannte Universalmagazine nach DIN 108, LKM-Magazine (Leica-Kindermann-Magazine), CS-Magazine (Compact and Secure Magazine) und/oder Paximat-Magazine ohne Umbau des Diascanners verwendet werden.

Für eine Datenübertragung, das heißt insbesondere für eine Übertragung der Bilddateien, auf oder auch von einem externen Datenverarbeitungsgerät und/oder auf ein externes Speichermedium sieht eine Ausgestaltung der Erfindung einen Steckanschluss, beispielsweise eine USB-, Mini-USB- oder Mikro-USB-Buchse und/oder eine FireWire-Buchse vor. Mit dem Steckanschluss lassen sich die Bilddateien des erfindungsgemäßen Diascanners ohne weiteres Gerät, insbesondere ohne einen Computer, auf ein Speichermedium wie beispielsweise einen USB-Stick oder eine externe Festplatte übertragen. Der Steckanschluss ermöglicht eventuell auch eine Datenkommunikation mit einem Computer.

In bevorzugter Ausgestaltung der Erfindung weist der Diascanner eine Software zur Staub- und Kratzerkorrektur auf. Solche Verfahren sind bekannt und werden hier nicht näher erläutert.

Wegen seiner Verwendbarkeit als Stand-Alone Gerät sieht die Erfindung einen Bildschirm zum Betrachten der gescannten Dias, also des Inhalts der Bilddateien, vor. Der Bildschirm ist als Klappbildschirm ausgeführt, der zwischen einer Betrachtungsposition, in der eine Darstellung auf dem Klappbildschirm sichtbar ist, und einer Nichtgebrauchsposition hin- und her schwenkbar am Diascanner angeordnet ist. In der Nichtgebrauchsposition liegt der Klappbildschirm an einem Gehäuse des Diascanners an oder das Gehäuse weist eine Vertiefung für den Klappbildschirm auf, in die sich der Klappbildschirm bei Nichtgebrauch schwenken lässt. Dadurch steht der Klappbildschirm in der Nichtgebrauchsstellung nicht störend vom Gehäuse des Diascanners ab und ist vor Beschädigung geschützt. Insbesondere ist in der Nichtgebrauchsposition eine Betrachtungsseite, auf der die Dias dargestellt werden, dem Gehäuse des Diascanners zugewandt.

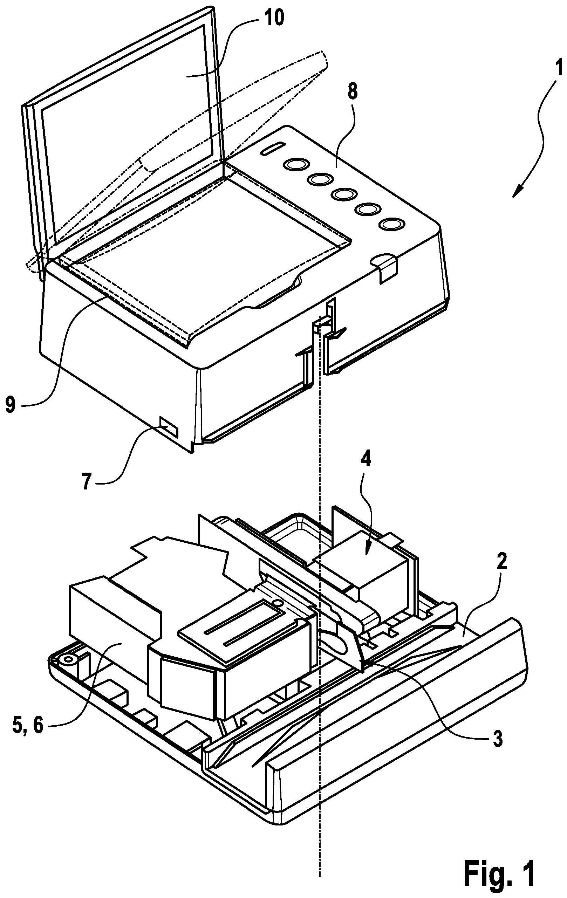

Zum schnellen Scannen der Dias sieht eine Ausgestaltung der Erfindung einen Flächensensor als Bildsensor vor, der anders als ein Zeilensensor, der ein Bild zeilenweise Punkt für Punkt erfasst, das Bild als Ganzes und auf einmal erfasst. Die in der vorstehenden allgemeinen Beschreibung, der nachfolgenden Beschreibung eines Ausführungsbeispiels, den Ansprüchen und der Zeichnung offenbarten Merkmale können jeweils einzeln, zu mehreren in beliebiger Kombination oder alle in Ausführungen der Erfindung vorhanden sein. Möglich ist auch eine Ausführung der Erfindung, die nicht alle Merkmale des Anspruchs 1 umfasst. Die vorstehend erläuterten Ausführungen und Ausgestaltungen der Erfindung können beliebig kombiniert werden.

Die Erfindung wird nachfolgend anhand eines in der Zeichnung dargestellten Ausführungsbeispiels näher erläutert. Die Zeichnung zeigt eine perspektivische Darstellung eines erfindungsgemäßen Diascanners mit abgehobenem Gehäuse.

Der in der Zeichnung dargestellte, erfindungsgemäße Diascanner 1 dient zum Digitalisieren von Dias, das heißt zum Umwandeln von Dias in digitale Bilddateien.

Er weist eine Magazinführung 2 mit einem Magazinvorschub auf, mit dem ein in die Magazinführung 2 eingeführtes, nicht dargestelltes Diamagazin in seiner Längsrichtung schrittweise um jeweils den Abstand zweier Dias in der Magazinführung 2 verschiebbar ist, so dass ein Dia aus dem Diamagazin in eine Zugriffposition einer Zuführeinrichtung 3 des Diascanners 1 transportiertbar ist. Die Magazinführung 2 und der Magazinvorschub sind für eine Verwendung verschiedener Diamagazine, wie sie für Diaprojektoren verwendet werden ausgebildet. Es können beispielsweise Universalmagazine nach DIN 108, LKM-Magazine (Leica-Kindermann-Magazine), CS-Magazine (Compact and Secure Magazine) und/oder Paximat-Magazine ohne Umbau des Diascanners 1 bzw. der Magazinführung 2 und des Magazinvorschubs verwendet werden.

Die Zuführeinrichtung 3 entnimmt ein Dia, das sich in der Zugriffsposition der Magazinführung 2 befindet, aus dem nicht dargestellten Diamagazin und transportiert es in eine Scanposition zwischen einer Lichtquelle 4, von der in der Zeichnung ein Gehäuse zu sehen ist, und einer Scaneinrichtung 5.

Die Lichtquelle 4 durchleuchtet das Dia und projiziert das Bild des Dias auf eine lichtempfindliche Fläche eines Bildsensors 6 der Scaneinrichtung 5. Mit der Bezugszahl 6 bezeichnet ist in der Zeichnung eine Platine, auf deren einem Betrachter abgewandten Seite der Bildsensor 6 angeordnet ist. Zum schnellen Scannen weist der Diascanner 1 des Ausführungsbeispiels einen Flächensensor als Bildsensor 6 auf, der alle Punkte des projizierten Bildes gleichzeitig in digitale Werte wandelt.

Der Diascanner 1 ist ein Stand-Alone Gerät, das ohne weiteres Gerät funktionsfähig ist und nicht an beispielsweise einen Computer angeschlossen werden muss. Gleichwohl ist ein Anschluss ein einen Computer oder ein anderes Datenverarbeitungsgerät möglich. Zur Ausbildung als Stand-Alone Gerät weist der erfindungsgemäße Diascanner 1 einen Prozessor zur digitalen Verarbeitung der digitalen Werte des Bildsensors 6 in eine digitale Bilddatei und einen digitalen Datenspeicher zur Speicherung der Bilddatei auf. Im Ausführungsbeispiel sind der Prozessor und Datenspeicher in einem Mikroprozessor zusammengefasst, der auf der Platine der Scaneinrichtung 5 angeordnet ist, auf der auch der Bildsensor 6 angeordnet ist. Wie der Bildsensor 6 befindet sich der Mikroprozessor auf der dem Betrachter abgewandten Seite der Platine und ist deswegen nicht sichtbar.

Der Prozessor bzw. Mikroprozessor steuert auch die Komponenten des Diascanners 1, insbesondere den Magazinvorschub, die Zuführeinrichtung 3, die Lichtquelle 4 und den Bildsensor 6 der Scaneinrichtung 5. Der Mikroprozessor enthält auch eine Software zur digitalen Staub- und Kratzerentfernung bzw. Staub- und Kratzerkorrektur, wofür die Lichtquelle 4 zusätzlich eine Infrarot Lichtquelle aufweist, die allerdings nicht zwingend für die Erfindung ist.

Nach dem Scannen transportiert die Zuführeinrichtung 3 das Dia zurück in das Diamagazin in der Magazinführung 2, das anschließend vom Magazinvorschub um ein Dia weiter bewegt wird, so dass das nächste Dia in die Zugriffsposition der Zuführeinrichtung 3 gelangt.

Zur Übertragung der Bilddateien auf einen externen Datenspeicher wie beispielsweise einen USB-Stick oder eine externe Festplatte weist der Diascanner 1 einen Steckanschluss 7, beispielsweise eine USB- und/oder eine FireWire Buchse auf. Über den Steckanschluss 7 ist auch eine Kommunikation mit einem externen Datenverarbeitungsgerät, insbesondere mit einem Computer möglich. Auf diese Weise lässt sich der als Stand-Alone Gerät ausgebildete Diascanner 1 mittels eines Computers steuern.

Ein Gehäuse 8 des Diascanners 1 weist eine rechteckige Vertiefung 9 für einen Klappbildschirm 10 auf, in die der Klappbildschirm 10 bei Nichtgebrauch versenkbar ist, so dass eine Rückseite des Klappbildschirms 10 bündig mit einer Oberfläche des Gehäuses 8 ist. Der eigentliche Bildschirm des Klappbildschirms 10 ist in dieser mit Strichlinien dargestellten Nichtgebrauchsposition einem Grund der Vertiefung 9 im Gehäuse 8 des Diascanners 1 zugewandt und dadurch geschützt. Zum Betrachten der Bilddateien lässt sich der Klappbildschirm 10 wie gezeigt aus der Vertiefung 9 des Gehäuses 8 heraus nach oben schwenken, so dass er schräg nach oben vom Gehäuse 8 absteht und der eigentliche Bildschirm sichtbar ist.

## Patentansprüche

1. Diascanner zum Umwandeln von Dias in digitale Bilddateien, mit einer Magazinführung (2) und einem Magazinvorschub für ein Diamagazin, mit einer Scaneinrichtung (5) zum Scannen eines Dias, und mit einer Zuführeinrichtung (3) zum Zuführen eines Dias aus dem Diamagazin in die Scaneinrichtung (5) und zurück in das Diamagazin oder in ein anderes Diamagazin, **dadurch gekennzeichnet, dass** der Diascanner (1) ein ohne weitere Geräte funktionsfähiges Stand-Alone Gerät mit einem digitalen Datenspeicher zum Speichern der digitalen Bilddateien und mit einem Prozessor zur Steuerung der Komponenten des Diascanners (1) und zur digitalen Verarbeitung von Daten der Scaneinrichtung (5) ist und dass der Diascanner (1) einen Klappbildschirm (10), der sich zwischen einer Betrachtungsposition, in der eine Darstellung auf dem Klappbildschirm (10) sichtbar ist, und einer Nichtgebrauchsposition, in der der Klappbildschirm (10) in einer Vertiefung (9) des Gehäuses (8) einliegt, hin- und herschwenken lässt, zum Darstellen gescannter Dias aufweist.

2. Diascanner nach Anspruch 1, **dadurch gekennzeichnet, dass** die Magazinführung (2) und der Magazinvorschub für verschiedene Diamagazintypen geeignet sind.

3. Diascanner nach Anspruch 1 oder 2, **dadurch gekennzeichnet, dass** der Diascanner einen Steckanschluss (7) zur Datenübertragung mit einem externen Datenverarbeitungsgerät und/oder für ein Speichermedium aufweist.

4. Diascanner nach einem oder mehreren der Ansprüche 1 bis 3, **dadurch gekennzeichnet, dass** der Diascanner (1) eine Software zur Staubentfernung und/oder Kratzerentfernung aufweist.

5. Diascanner nach einem oder mehreren der vorhergehenden Ansprüche, **dadurch gekennzeichnet, dass** die Scaneinrichtung (5) einen Flächensensor als Bildsensor (6) aufweist.

## Claims

1. A slide scanner for converting slides into digital image files, comprising a magazine guide (2) and a magazine advancing mechanism for a slide magazine, further comprising a scanning device (5) for scanning a slide, and a feeding device (3) for feeding a slide from the slide magazine into the scanning device (5) and back into the slide magazine or into another slide magazine, **characterized in that** the slide scanner (1) is a stand-alone device, which is able to function without further devices and includes a digital data memory for storing the digital image files and a processor for controlling the components of the slide scanner (1) and for digitally processing data of the scanning device (5), and that the slide scanner (1) comprises a folding screen (10), which can be pivoted back and forth between a viewing position, in which a representation on the folding screen (10) is visible, and a non-usage position, in which the folding screen (10) rests in a recess (9) of the housing (1), for displaying scanned slides.

2. The slide scanner according to claim 1, **characterized in that** the magazine guide (2) and the magazine advancing mechanism are suitable for different slide magazine types.

3. The slide scanner according to claim 1 or 2, **characterized in that** the slide scanner comprises a plug-in connection (7) for data transmission with an external data processing device and/or with a storage medium.

4. The slide scanner according to any one or more of claims 1 to 3, **characterized in that** the slide scanner (1) includes software for dust removal and/or scratch removal.

5. The slide scanner according to any one or more of the preceding claims, **characterized in that** the scanning device (5) comprises an area sensor, serving as an image sensor (6).

## Revendications

1. Numériseur de diapositives dévolu à la conversion de diapositives en des fichiers d'images numériques, comprenant un guide-magasins (2) et un système d'avance affecté à un magasin de diapositives, un dispositif de numérisation (5) conçu pour numériser une diapositive, et un dispositif délivreur (3) destiné à insérer une diapositive dans ledit dispositif de numérisation (5) à partir dudit magasin de diapositives, et à la réintroduire dans ledit magasin de diapositives ou dans un autre magasin de diapositives, **caractérisé par le fait que** ledit numériseur (1) de diapositives est un appareil autonome apte à fonctionner sans appareils supplémentaires, équipé d'une mémoire de données numériques dédiée à la mémorisation des fichiers d'images numériques, et d'un processeur dédié à la commande des composants dudit numériseur (1) de diapositives et au traitement numérique de données du dispositif de numérisation (5) ; et **par le fait que** ledit numériseur (1) de diapositives est doté d'un écran rabattable (10) pouvant accomplir des va-et-vient pivotants, en vue de la représentation de diapositives numérisées, entre un emplacement d'observation auquel une représentation est visible sur ledit écran rabattable (10), et un emplacement de non-utilisation auquel ledit écran rabattable (10) est niché dans un renfoncement (9) du boîtier (8).

2. Numériseur de diapositives, selon la revendication 1, **caractérisé par le fait que** le guide-magasins (2) et le système d'avance sont appropriés pour différents types de magasins de diapositives.

3. Numériseur de diapositives, selon la revendication 1 ou 2, **caractérisé par le fait que** ledit numériseur de diapositives comporte une connexion enfichable (7), en vue de la transmission de données avec un appareil extérieur de traitement de données et/ou pour un support de mémorisation.

4. Numériseur de diapositives, selon l'une ou plusieurs des revendications 1 à 3, **caractérisé par le fait que** ledit numériseur (1) de diapositives est pourvu d'un logiciel d'élimination de poussière et/ou d'élimination d'éraflures.

5. Numériseur de diapositives, selon l'une ou plusieurs des revendications précédentes, **caractérisé par le fait que** le dispositif de numérisation (5) est muni d'un capteur de surfaces en tant que capteur d'images (6).
